# EUROPÄISCHE PATENTSCHRIFT

(11) **EP 1 867 542 B1**
(45) Veröffentlichungstag und Bekanntmachung des Hinweises auf die Patenterteilung: **22.07.2009**
(21) Anmeldenummer: 07107835.6
(22) Anmeldetag: 09.05.2007
(51) Int. Cl.: B60W 30/12, B62D 15/02

(54) **Spurhalteassistent mit Spurwechselfunktion**
Lane keeping assistant with lane change function
Assistant de suivi de voie doté d'une fonction de changement de voie

(30) Priorität: 13.06.2006 DE 102006027325
(43) Veröffentlichungstag der Anmeldung: 19.12.2007
(73) Patentinhaber: ROBERT BOSCH GMBH, 70442 Stuttgart (DE)
(72) Erfinder: Scherl, Michael, 74321 Bietigheim (DE); Weilkes, Michael, 31199 Diekholzen (DE); Buerkle, Lutz, 71229 Leonberg (DE); Rentschler, Tobias, 75180 Pforzheim (DE)

(56) Entgegenhaltungen:
- EP-A- 1 275 573
- EP-A- 1 726 513
- EP-A2- 0 806 336
- DE-A1-2102005 054 97
- US-A1- 2003 097 206
- US-A1- 2004 262 063

## Beschreibung

### Stand der Technik

Die Erfindung betrifft einen Spurhalteassistenten für Kraftfahrzeuge, mit einer Sensoreinrichtung zur Erkennung der Fahrspuren auf der Fahrbahn, einer Steuereinrichtung, die über ein Stellglied ein Stellmoment auf die Lenkung des Fahrzeugs ausübt, um das Fahrzeug in der Spur zu halten, und einer Einrichtung zur Erkennung einer Spurwechselabsicht des Fahrers, wobei die Steuereinrichtung dazu ausgebildet ist, bei erkannter Spurwechselabsicht das auf die Lenkung ausgeübte Stellmoment im Sinne eines leichteren Spurwechsels zu modifizieren.

Ein solcher Spurhalteassistent ist z. B. aus DE 101 14 470 bekannt. Als Sensoreinrichtung ist dabei ein Videosystem vorgesehen, mit dem die Fahrspurmarkierungen auf der Fahrbahn und damit die Querposition des eigenen Fahrzeugs relativ zur aktuell befahrenen Fahrspur, im folgenden als "eigene Fahrspur" bezeichnet, erkannt werden können. Wenn die Querposition des Fahrzeugs um mehr als eine bestimmte Toleranzgrenze zur einen oder anderen Seite von der Spurmitte abweicht, erfolgt automatisch ein Regeleingriff in die Lenkung, um das Fahrzeug wieder annähernd auf die Spurmitte zurückzuführen. Hierdurch wird der Fahrkomfort für den Fahrer erheblich gesteigert und auch die Verkehrssicherheit erhöht, da der Fahrer sich ganz auf das Verkehrsgeschehen konzentrieren kann.

Wenn der Fahrer jedoch absichtlich einen Spurwechsel vornehmen will, etwa um einen Überholvorgang einzuleiten, muß er bei aktiver Spurhaltefunktion größere Kräfte auf das Lenkrad ausüben, um die durch den Regeleingriff des Spurhalteassistenten verursachten Kräfte zu überwinden. Aus dem Grund ist bei dem bekannten System vorgesehen, daß, wenn eine Spurwechselabsicht des Fahrers erkannt wird, beispielsweise anhand der Betätigung des Fahrtrichtungsanzeigers (Blinkers), die Spurhaltefunktion zumindest zeitweise deaktiviert wird.

Es ist auch bereits ein System vorgeschlagen worden, bei dem bei erkannter Spurwechselabsicht die Spurhaltefunktion asymmetrisch nur für die Fahrzeugseite eingeschränkt oder ausgesetzt wird, zu welcher der Fahrer den Spurwechsel vornehmen will.

Andererseits sind sogenannte Spurwechselassistenten bekannt, die den Fahrer warnen, wenn er versucht, einen Spurwechsel vorzunehmen, ein solcher Spurwechsel jedoch in der aktuellen Verkehrssituation nicht möglich ist. Diese Systeme weisen zumeist einen Radarsensor auf, der den Rückraum des Fahrzeugs überwacht, und wenn ein Fahrzeug auf der linken Nebenspur, also der Überholspur, geortet wird, so wird anhand des Abstands und der Relativgeschwindigkeit dieses Fahrzeugs geprüft, ob ein Spurwechsel möglich ist oder nicht. Ein Beispiel eines solchen Systems wird in EP 1 508 476 beschrieben.

Aus der nicht vorveröffentlichten EP 1726 513 , als nächstliegender Stand der Technik betrachtet, ist ein System bekannt, nach dem Oberbegriff von Anspruch 1, das ein Spurhalteunterstützungsmodul (LKSM) aufweist, das Informationen eines Spurerkennungssystems erhält und weiterverarbeitet und ein Lenkmoment ausgibt, das ein versehentliches Verlassen der Fahrspur verhindert, so dass das Fahrzeug entlang der erkannten Fahrspur geführt wird. Wird das Setzen eines Fahrspurwechselsignals durch den Fahrer erkannt, so wird ein Spurwechsel zugelassen. Wird mittels eines Nachbarspurüberwachungssystem (LLMS) erkannt, dass sich ein Fahrzeuge nähert, so wird auch bei gesetztem Fahrspurwechselsignals ein Spurwechsel nicht zugelassen.

### Offenbarung der Erfindung

Aufgabe der Erfindung ist es, den Komfort und die Sicherheit bei einem absichtlichen Spurwechsel weiter zu verbessern.

Diese Aufgabe wird erfindungsgemäß bei einem Spurhalteassistenten der eingangs genannten Art dadurch gelöst, daß die Steuereinrichtung ein Prüfmodul aufweist, das anhand der Daten der Sensoreinrichtung prüft, ob ein Spurwechsel zulässig ist, und das die Modifizierung des Stellmoments nur bei zulässigem Spurwechsel erlaubt.

Durch das Prüfmodul wird Situationen Rechnung getragen, in denen eine Spurwechselabsicht des Fahrers erkennbar oder zu vermuten ist, sich jedoch aus den Daten der Sensoreinrichtung ergibt, daß der Spurwechsel zur Zeit nicht zulässig oder nicht möglich ist. In diesem Fall bleibt die Spurhaltefunktion trotz der erkannten Spurwechselabsicht bestehen, so daß der Fahrer das vom Stellglied erzeugte Stellmoment überwinden muß, wenn er versucht, die Spurgrenze zu überfahren. Auf diese Weise erhält der Fahrer eine haptische Rückmeldung, die ihn darauf hinweist, daß der Spurwechsel nicht möglich ist. Zusätzlich kann selbstverständlich in dieser Situation auch ein optisches oder akustisches Warnsignal an den Fahrer ausgegeben werden. Durch die Erfindung wird jedoch nicht nur eine haptische Warnfunktion erreicht, sondern zugleich auch die Gefahr verringert, daß der Fahrer die Spurgrenze überfährt, weil er nicht oder nicht rechtzeitig auf das Warnsignal reagiert. Auf diese Weise wird die Verkehrssicherheit bei Spurwechselvorgängen deutlich erhöht.

Vorteilhafte Weiterbildungen und Ausgestaltungen der Erfindung ergeben sich aus den Unteransprüchen.

In einer besonders vorteilhaften Ausführungsform ist der erfindungsgemäße Spurhalteassistent mit einem Spurwechselassistenten kombiniert. Die Sensoreinrichtung umfaßt in diesem Fall auch Sensorkomponenten, beispielsweise ein oder mehrere Radarsensoren, die den Rückraum des Fahrzeugs überwachen, und das Prüfmodul oder der Spurwechselassistent prüft anhand der Daten des Radarsensors, ob ein gefahrloser Spurwechsel möglich ist oder ob sich auf der Nebenspur, auf die der Fahrer ausscheren will, von hinten ein Fahrzeug mit höherer Geschwindigkeit annähert.

Für die Spurhaltefunktion wird die Sensoreinrichtung in der Regel auch eine nach vom auf die Fahrbahn gerichtete Videokamera aufweisen, mit der die Fahrbahngrenzen und die Spurmarkierungen auf der Fahrbahn erkannt werden. In diesem Fall kann mit Hilfe des Videosystems auch die Art der jeweiligen Spurmarkierung identifiziert werden. Insbesondere kann zwischen Spurmarkierungen in der Form unterbrochener Linien, die nach den einschlägigen Vorschriften überfahren werden dürfen, und Spurmarkierungen in der Form durchgezogener Linien unterschieden werden, die nicht überfahren werden dürfen. Ebenso können auch Kombinationen aus einer durchgezogenen Linie und einer unterbrochenen Linie erkannt werden, die nur in eine Richtung überfahren werden dürfen. Wenn das Prüfmodul erkennt, daß das Überfahren der Spurmarkierung in der beabsichtigten Richtung nicht erlaubt ist, bleibt die Spurhaltefunktion aktiv, so daß der Fahrer auch in diesen Fällen eine Warnung erhält bzw. daran gehindert wird, die Spurgrenze zu überfahren.

Mit Hilfe des Videosystems und gegebenenfalls ergänzender Sensorkomponenten, beispielsweise eines nach vom gerichteten Radarsensors, der normalerweise zur Abstandsregelung dient, läßt sich auch erkennen, auf welcher Fahrspur einer mehrspurigen Richtungsfahrbahn sich das eigene Fahrzeug befindet. Wenn auf diese Weise festgestellt wird, daß sich das Fahrzeug bereits auf der äußersten linken Spur der Richtungsfahrbahn befindet und somit ein Spurwechsel nach links nicht möglich ist, hält das Prüfmodul die Spurhaltefunktion auch dann aktiv, wenn der Fahrer den linken Fahrtrichtungsanzeiger betätigt, was normalerweise auf eine Spurwechselabsicht hindeuten würde. Gemäß einer Weiterbildung kann im Rahmen dieser Funktion auch zwischen Fahrten auf Autobahnen einerseits und Fahrten auf Landstraßen oder innerstädtischen Straßen anderseits unterschieden werden. Wenn auf Landstraßen oder innerstädtischen Straßen die äußerste linke Spur der Richtungsfahrbahn nur durch eine unterbrochene Linie von der Gegenfahrbahn getrennt ist, so wird es grundsätzlich erlaubt sein, während eines Überholvorgangs vorübergehend auf die Gegenfahrbahn zu wechseln. In diesem Fall kann folglich die Spurhaltefunktion bei erkannter Spurwechselabsicht ausgesetzt werden, obwohl sich das Fahrzeug auf der äußersten linken Spur der eigenen Richtungsfahrbahn befindet, so daß in dieser Situation der Spurwechsel nicht unnötig behindert wird.

Wenn eine Spurwechselabsicht nach einer Seite, beispielsweise nach links, erkannt wird und das Prüfmodul entscheidet, daß ein Spurwechsel in dieser Richtung zulässig ist, so wird die Spurhaltefunktion bevorzugt asymmetrisch nur für die linke Fahrzeugseite ausgesetzt, während bei Abweichungen von der Fahrspur nach rechts die Spurhaltefunktion aktiv bleibt.

Dadurch wird die Gefahr verringert, daß der Fahrer bei der Vorbereitung des Spurwechsels zu weit in der entgegengesetzten Richtung von der eigenen Spur abkommt. Wenn der Fahrer beispielsweise einen Wechsel auf die Überholspur beabsichtigt, in Ländern mit Rechtsverkehr also auf die linke Spur, muß er bei hoher Verkehrsdichte sein Augenmerk vor allem auf den rückwärtigen Verkehr auf der Zielspur richten, etwa durch Beobachtung des Rückspiegels oder indem er sich umwendet, um Fahrzeuge im toten Winkel zu erfassen, bis der richtige Zeitpunkt für das Einfädeln in den Verkehr auf der Nebenspur gekommen ist. Dabei besteht, insbesondere beim Einfahren in eine Linkskurve, die Gefahr, daß er zu weit nach rechts abdriftet. Dies wird durch die bevorzugte Ausführungsform der Erfindung wirksam verhindert.

Wenn das Fahrzeug nicht nur mit einem Spurhalteassistenten, sondern zusätzlich auch mit einem Abstandsregelsystem (ACC; Adaptive Cruise Control) ausgerüstet ist, beispielsweise auf der Basis eines Abstandsradars, kann die Erkennung der Spurwechselabsicht nicht nur anhand des Zustands des Fahrtrichtungsanzeigers sondern wahlweise oder zusätzlich auch anhand der vom Abstandsradar erkannten Verkehrssituation erfolgen. Beispielsweise kann beim Auffahren auf ein vorausfahrendes langsameres Fahrzeug auf der eigenen Spur eine Überholabsicht und damit ein bevorstehender Wechsel auf die Überholspur unterstellt werden. Umgekehrt kann die Absicht zu einem Spurwechsel nach rechts unterstellt werden, wenn das Radarsystem erkennt, daß die rechte Nebenspur frei ist.

### Kurze Beschreibung der Zeichnungen

Ein Ausführungsbeispiel der Erfindung ist in den Zeichnungen dargestellt und in der nachfolgenden Beschreibung näher erläutert.

Es zeigen:
Fig. 1 ein Blockdigramm eines Fahrerassistenzsystems mit einem erfindungsgemäßen Spurhalteassistenten;
Fig. 2 ein Diagramm eines Regelkreises des Spurhalteassistenten; und
Fig. 3 bis 6 Skizzen zur Erläuterung der Arbeitsweise des Spurhalteassistenten in unterschiedlichen Situationen.

### Ausführungsform der Erfindung

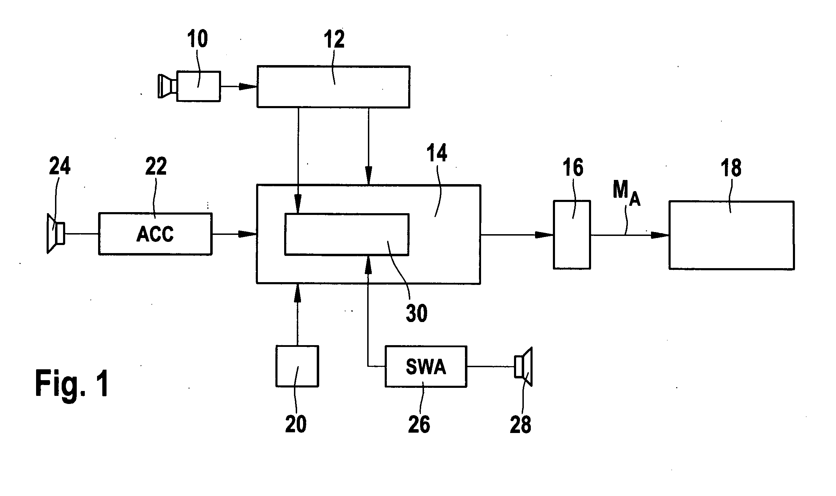

Der in Figur 1 gezeigte Spurhalteassistent weist zur Erkennung der Fahrspuren der Fahrbahn als eine Komponente einer Sensoreinrichtung eine Videokamera 10 sowie eine zugehörige Auswerteelektronik 12 auf. Eine Steuereinrichtung 14 bestimmt anhand der Daten der Sensoreinrichtung den Fahrspurverlauf, die Fahrzeugorientierung in der Fahrspur und die Querposition Y des Fahrzeugs relativ zur Spurmitte der eigenen Fahrspur und berechnet in Abhängigkeit von diesen Größen ein Stellmoment M_{A}, mit dem über ein Stellglied 16 auf die Lenkung 18 des Fahrzeugs eingewirkt wird, um das Fahrzeug annähernd auf der Spurmitte zu halten oder wieder auf die Spurmitte zurückzuführen. Die Auswerteelektronik 12 und die Steuereinrichtung 14 können beispielsweise durch ein elektronisches Datenverarbeitungssystem mit einem oder mehreren Mikroprozessoren und zugehörige Software gebildet werden. Ein Sensor 20 erfaßt den Zustand des Fahrtrichtungsanzeigers des Fahrzeugs und bildet so eine Einrichtung, mit der eine Spurwechselabsicht des Fahrers sowie die Richtung des Spurwechsels erkannt werden können.

In gezeigten Beispiel ist das Fahrzeug zusätzlich mit einem Abstandsregelsystem (ACC) 22 ausgerüstet, zu dem auch ein Ortungssystem 24, beispielsweise ein Radarsensor, zur Ortung von Fahrzeugen im Vorfeld des eigenen Fahrzeugs sowie zur Messung der Abstände und Relativgeschwindigkeiten dieser Fahrzeuge gehört. Eine Überholabsicht des Fahrers kann somit wahlweise auch anhand der vom ACC-System erkannten Verkehrssituation festgestellt werden. Beispielsweise wird eine Spurwechselabsicht nur dann erkannt, wenn die Verkehrssituation einen Spurwechsel in der einen oder anderen Richtung nahelegt und außerdem der Fahrtrichtungsanzeiger für diese Richtung aktiviert ist.

Neben dem Spurhalteassistenten und dem Abstandsregelsystem 22 enthält das Fahrerassistenzsystem auch einen Spurwechselassistenten 26, dem als weitere Sensorkomponente ein oder zwei Radarsensoren 28 zugeordnet sind, die den Rückraum des Fahrzeugs überwachen. Wenn eine Spurwechselabsicht erkannt wird und mit Hilfe des Rückraumradars festgestellt wird, daß sich auf der betreffenden Nebenspur von hinten ein Fahrzeug mit höherer Geschwindigkeit annähert, so wird in bekannter Weise ein Warnsignal an den Fahrer ausgegeben. Zusätzlich wird auch ein in der Steuereinrichtung 14 für den Spurhalteassistenten enthaltenes Prüfmodul 30 über diese Situation informiert.

Wenn anhand des vom Sensor 20 erfaßten Zustands des Fahrtrichtungsanzeigers eine Spurwechselabsicht des Fahrers, beispielsweise nach links, erkannt wird, so prüft das Prüfmodul 30, ob die folgenden drei Bedingungen erfüllt sind:
1. Links neben der von dem eigenen Fahrzeug befahrenen Fahrspur ist mindestens noch eine weitere Spur vorhanden. Dies kann anhand der Daten der Videokamera 10 erkannt werden, gegebenenfalls ergänzt durch Daten der Radarsensoren 24, 28, die durch Ortung von Fahrzeugen auf der Nebenspur feststellen, zu welcher Richtungsfahrbahn diese Spur gehört.
2. Die Fahrspurmarkierung, die die eigene Fahrspur von der linken Nebenspur trennt, ist von dem Typ, der ein Überfahren nach links zuläßt. Es handelt es sich also beispielsweise um eine unterbrochene Linie oder um eine durchgehende Linie, neben der sich auf der rechten Seite eine unterbrochene Linie befindet. Der Typ der Fahrspurmarkierung kann durch Auswertung des mit der Videokamera 10 erhaltenen Bildes bestimmt werden.
3. Der Spurwechselassistent 26 zeigt an, daß ein gefahrloser Spurwechsel nach links möglich ist, d. h., daß sich kein überholendes Fahrzeug auf der Nebenspur annähert.

Wenn alle drei Bedingungen erfüllt sind, wird durch die Steuereinrichtung 14 die Spurhaltefunktion für die linke Fahrzeugseite ausgesetzt, so daß der Fahrer keinen erhöhten Widerstand überwinden muß, wenn er das Fahrzeug nach links lenkt, um die Fahrspurgrenze zu überfahren. Ist dagegen mindestens eine der oben genannten drei Bedingungen nicht erfüllt, bleibt die Spurhaltefunktion für beide Fahrzeugseiten aktiv.

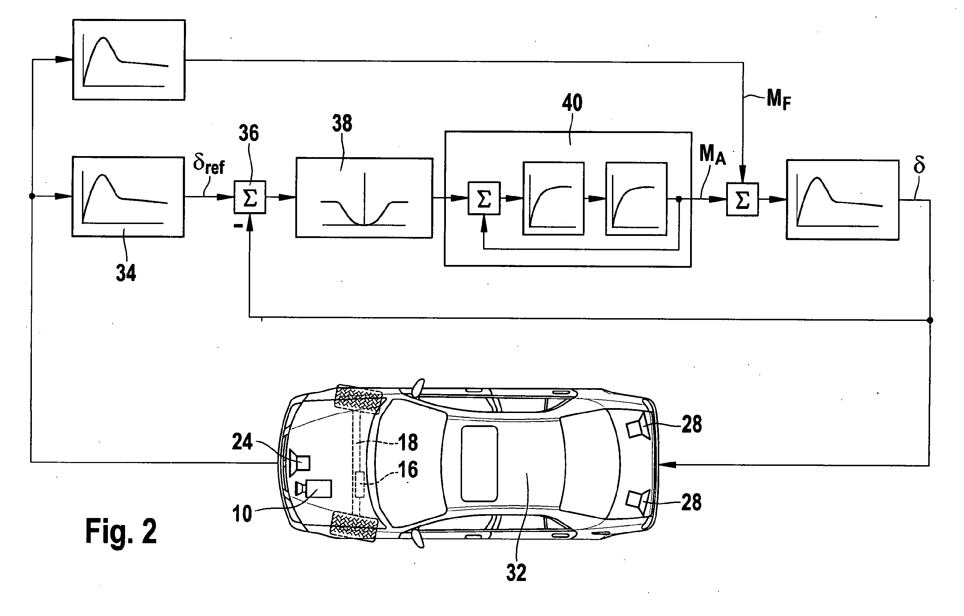

Die Funktionsweise des Spurhalteassistenten beruht auf einen Regelkreis, der in Figur 2 für ein Kraftfahrzeug 32 dargestellt ist. Im Grundriß des Kraftfahrzeugs 32 sind symbolisch die Komponenten der Sensoreinrichtung, also die Videokamera 10 und die Radarsensoren 24, 28 dargestellt, sowie auch das Stellglied 16 und die Lenkung 18. Von der Videokamera 10 oder einem vergleichbaren Fahrspurerkennungssystem werden der Fahrspurverlauf, d. h., die Krümmung und die Krümmungsänderung der Fahrbahn vor dem Fahrzeug, sowie die Relativposition des Fahrzeugs in der Fahrspur, d. h., die laterale Ablage und der Bahndifferenzwinkel bestimmt. Auf der Basis dieser Informationen sowie weiterer Fahrzustandsgrößen wie Geschwindigkeit, Gierrate, Schwimmwinkel, etc. wird mittels eines Modells ein Referenzlenkwinkel d_{ref} berechnet, der in der aktuellen Fahrsituation erforderlich ist, um das Fahrzeug in der Fahrspur zu führen. In einem Summationsglied 36 wird die Differenz d_{ref} - d zwischen dem Referenzlenkwinkel und dem vom Fahrer gestellten Lenkwinkel d berechnet. Das vom Spurhalteassistenten zusätzlich aufzubringende Stellmoment wird dann anhand einer Kennlinie 38 als Funktion dieser Lenkwinkeldifferenz bestimmt. Dieses Stellmoment M_{A} wird dann in einen Momentenregelkreis 40 des Stellglieds 16 eingeregelt und dem vom Fahrer über das Lenkrad ausgeübten Lenkdrehmoment M_{F} additiv überlagert. Auf diese Weise erfährt der Fahrer ein Führungsmoment, das ihn dabei unterstützt, das Fahrzeug in der Spur zu führen.

Möchte der Fahrer einen Spurwechsel durchführen, so zeigt er den Spurwechselwunsch z. B. durch Setzen des Blinkers (Fahrtrichtungsanzeigers) an. Wird der Spurwechselwunsch erkannt und außerdem vom Prüfmodul 30 bestätigt, daß der Spurwechsel möglich und zulässig ist, so wird dem Fahrer der Spurwechsel erleichtert, indem durch Absenken der Führungskennlinie der Widerstand bei einem Lenkeinschlag in die gewünschte Richtung reduziert wird. Bei einem Lenkeinschlag in entgegengesetzter Richtung bleibt die Spurführung dagegen erhalten.

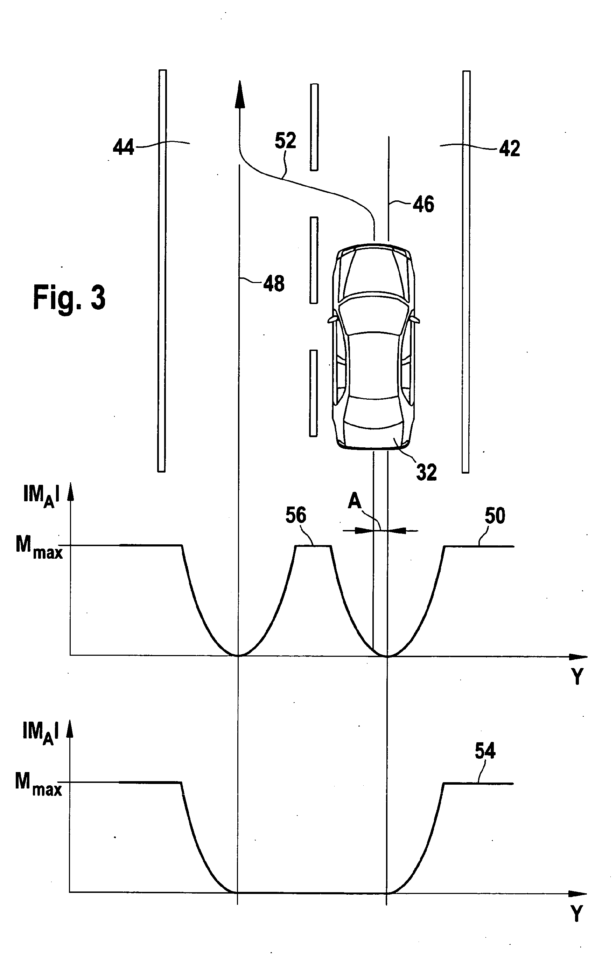

Diese Funktionsweise wird nun unter Bezugnahme auf Figur 3 näher erläutert. Im oberen Teil dieser Figur ist skizzenhaft eine Fahrbahn mit zwei Fahrspuren 42, 44 gezeigt. Die annähernd auf der Spurmitte verlaufenden Solltrajektorien sind jeweils durch eine Linie 46 bzw. 48 markiert. Das Fahrzeug 32 fährt auf der rechten Spur 42.

Solange keine Spurwechselabsicht des Fahrers erkannt ist, ist der Betrag des von der Steuereinrichtung 14 berechneten und über das Stellglied 16 auf die Lenkung 18 ausgeübten Stellmoments M_{A} in Abhängigkeit von der Querposition Y des Fahrzeugs 32 durch die Kurve 50 in Figur 3 gegeben. In der Praxis hängt diese Kraft von der Abweichung A des Fahrzeugs von der Solltrajektorie ab. In diese Abweichung fließen auch die Fahrbahnkrümmung und die Fahrzeugorientierung ein, was jedoch der Übersichtlichkeit halber in Fig. 3 nicht dargestellt ist. Der Teil der Kurve 50, der der rechten (eigenen) Fahrspur 42 entspricht, ist symmetrisch zu der Solltrajektorie 46, die beispielsweise durch die Spurmitte oder einen bestimmten Sollversatz zur Spurmitte gegeben ist. Wenn das Fahrzeug auf der Solltrajektorie fährt, erfolgt kein Lenkeingriff durch das Stellglied 16, und wenn die Querposition des Fahrzeugs in der einen oder anderen Richtung von der Solltrajektorie abweicht (Abweichung A), nimmt das vom Stellglied 16 ausgeübte Stellmoment M_{A} progressiv bis zu einem bestimmten Maximalwert Mₘₐₓ zu. Die Kraftrichtung ist dabei stets so, daß das Fahrzeug wieder auf die Solltrajektorie zurückgeführt wird. Entsprechendes gilt für den linken Teil der Kurve 50, die der linken Fahrspur 44 entspricht und die Spurhaltefunktion für eine Fahrt auf der linken Spur repräsentiert. Auf Fahrbahnen mit drei Spuren arbeitet das System analog.

In der Praxis kann die Kurve 50 in Abhängigkeit von der Fahrgeschwindigkeit des Fahrzeugs 32 skaliert werden, so daß die Stärke des Lenkeingriffs von der jeweiligen Fahrgeschwindigkeit abhängig ist.

Ein Pfeil 52 im oberen Teil der Figur 3 symbolisiert einen Spurwechsel des Fahrzeugs 32 von der rechten Fahrspur 42 (eigene Spur) auf die linke Fahrspur 44, die dann die Zielspur ist.

Wenn die Absicht des Fahrers zu einem solchen Spurwechsel erkannt wird, so wird die Kurve 50 vorübergehend durch die im unteren Teil der Figur 3 gezeigte Kurve 54 ersetzt. Diese Kurve ist asymmetrisch in bezug auf die durch die Linie 46 repräsentierte Solltrajektorie auf der eigenen Spur 42. Bei Abweichungen nach links erfolgt in diesem Fall kein Lenkeingriff durch das Stellglied 16, so daß der Fahrer beim Lenken auf die Zielspur keine Gegenkraft des Stellglieds 16 zu überwinden braucht. Der Ast der Kurve 54 rechts von der Solltrajektorie ist dagegen identisch mit dem entsprechenden Ast der Kurve 50, so daß bei Abweichungen von der Solltrajektorie nach rechts die Spurhaltefunktion wirksam bleibt.

Im gezeigten Beispiel hat die Kurve 50 links von der durch die Linie 48 repräsentierten Solltrajektorie auf der Zielspur 44 wieder einen ansteigenden Ast, der mit dem entsprechenden Ast der Kurve 50 identisch ist. Sobald das Fahrzeug 32 gegen Ende des Spurwechselvorgangs die Solltrajektorie der Zielspur 44 erreicht, setzt deshalb die Spurhaltefunktion für Abweichungen nach links allmählich wieder ein, so daß ein etwaiges Überschießen über die Solltrajektorie hinaus gemildert wird.

Das Erreichen oder Überschreiten der Linie 48 (oder das Erreichen einer y-Position kurz vor dieser Linie) kann zugleich ein Signal dafür bilden, daß der Spurwechselvorgang abgeschossen ist. Bevorzugt wird der Spurwechselvorgang jedoch dann als abgeschlossen betrachtet, wenn nach dem Abschalten des Blinkers ein vorbestimmtes Zeitintervall vergangen ist. Bei Abschluß des Spurwechselvorgangs kehrt die Steuereinrichtung 14 wieder zu der Kurve 50 zurück, so daß nun eine automatische Spurhaltung auf die Solltrajektorie der linken Fahrspur 44 erfolgt. Der Übergang von der Kurve 54 zu der Kurve 50 kann zweckmäßig in der Weise erfolgen, daß der rechte Ast der Kurve 54 allmählich (stetig) nach links verschoben wird oder das "Mittelstück" 56 der Kurve in Fig. 3 allmählich von 0 auf Mₘₐₓ erhöht wird. Auf diese Weise wird verhindert, daß der Fahrer beim Wiedereinsetzen der symmetrischen Spurhaltefunktion eine abrupte Kraftänderung am Lenkrad spürt.

Alternativ könnte der rechte Ast der Kurve 54 auch bereits während des Spurwechselvorgangs allmählich der Fahrzeugbewegung nachgeführt werden. Die hier beschriebene Variante, bei der die Kurve 54 in ihrer Form erhalten bleibt, bis das Fahrzeug 32 die Zielspur erreicht hat, hat jedoch den Vorteil, daß der Fahrer keine Gegenkraft zu überwinden braucht, falls er verkehrsbedingt dazu gezwungen ist, den Spurwechselvorgang abzubrechen.

Die oben beschriebene Arbeitsweise der Steuereinrichtung 14 gilt analog für den Fall eines Spurwechsels von der linken Spur auf die rechte Spur.

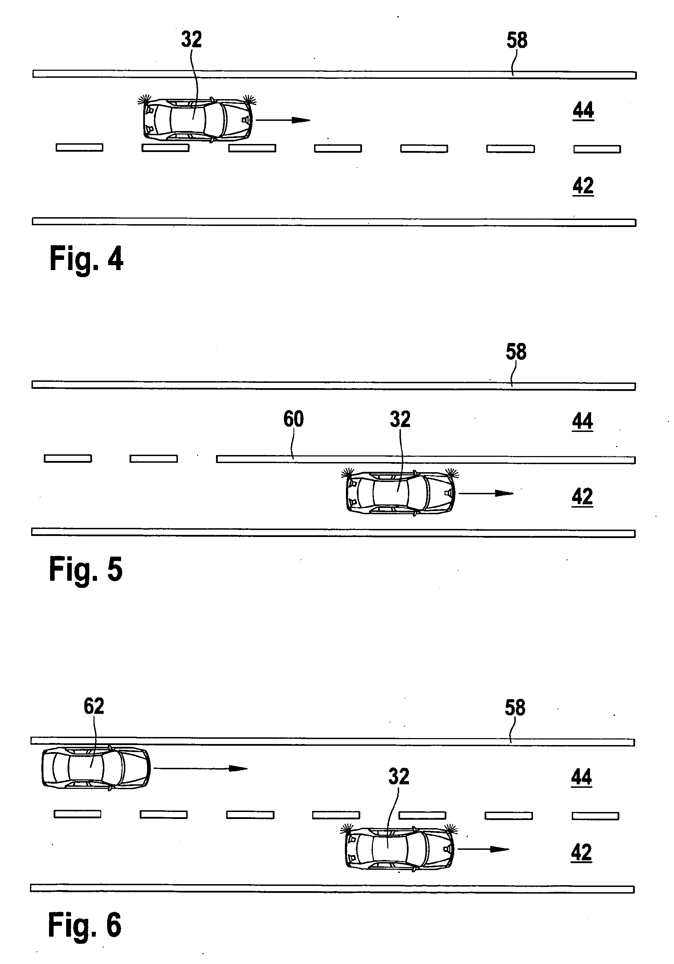

Unter Bezugnahme auf Figuren 4 bis 6 soll nun die Funktionsweise des Prüfmoduls 30 anhand einiger Beispielsituationen illustriert werden.

Figur 4 zeigt zunächst den "trivialen" Fall, daß der Fahrer den linken Blinker gesetzt hat, obwohl das Fahrzeug 32 bereits auf der äußersten linken Spur 44 einer zweispurigen Richtungsfahrbahn 58 fährt, so daß ein Spurwechsel nach links gar nicht möglich ist. In diesem Fall sorgt das Prüfmodul 30 dafür, daß die beidseitige Spurführung gemäß der Kurve 50 in Figur 3 aufrechterhalten bleibt. Diese Situation könnte allerdings ebenso gut auch durch eine geeignete Definition des "Spurwechselwunsches" beherrscht werden, indem etwa spezifiziert wird, daß das Setzen des Blinkers nur dann als Spurwechselwunsch zu interpretieren ist, wenn auch tatsächlich eine entsprechende Fahrspur für den Spurwechsel vorhanden ist. Die Funktion des Prüfmoduls 30 geht jedoch über diesen einfachen Fall hinaus, wie in Figur 5 illustriert ist.

In Figur 5 fährt das Fahrzeug 32 auf der rechten Spur 42 der Richtungsfahrbahn 58. Der Fahrer hat den linken Blinker gesetzt, was nun als eine echte Spurwechselabsicht zu interpretieren wäre. In dem hier befahrenen Abschnitt der Richtungsfahrbahn 58 wird jedoch die Fahrspurmarkierung 60 durch eine durchgezogene Linie gebildet, was bedeutet, daß ein Spurwechsel hier nicht erlaubt ist. Von der Videokamera 10 und dem zugehörigen Bildverarbeitungssystem wird dieser Charakter der Fahrspurmarkierung erkannt, und das Prüfmodul 30 sorgt dann dafür, daß auch in dieser Situation trotz unterstellter Spurwechselabsicht des Fahrers die beidseitige Spurhaltefunktion gemäß der Kurve 50 aufrechterhalten bleibt. Das Stellmoment M_{A} ist jedoch so ausgelegt, daß es notfalls vom Fahrer überwunden werden kann, falls ein Ausweichmanöver das Überfahren der Spurmarkierung erforderlich machen sollte.

Figur 6 zeigt eine ähnliche Situation wie Figur 5, jedoch mit dem Unterschied, daß die Fahrspurmarkierung wieder durch eine unterbrochene Linie gebildet wird. Auf der linken Spur 44 nähert sich hier von hinten ein überholendes Fahrzeug 62, so daß ein gefahrloser Spurwechsel nicht möglich wäre. Dies wird vom Spurwechselassistenten 26 erkannt, und das Prüfmodul 30 veranlaßt daraufhin, daß auch in dieser Situation die beidseitige Spurhaltefunktion gemäß der Kurve 50 in Figur 3 aufrechterhalten bleibt, gegebenenfalls zusätzlich zu einem optischen oder akustischen Warnhinweis an den Fahrer.

## Patentansprüche

1. Spurhalteassistent für Kraftfahrzeuge, mit einer Sensoreinrichtung (10, 24, 28) zur Erkennung der Fahrspuren (42, 44) auf der Fahrbahn (58), einer Steuereinrichtung (14), die über ein Stellglied (16) ein Stellmoment (M_{A}) auf die Lenkung (18) des Fahrzeugs (32) ausübt, um das Fahrzeug in der Spur zu halten, und einer Einrichtung (20) zur Erkennung einer Spurwechselabsicht des Fahrers, wobei die Steuereinrichtung (14) dazu ausgebildet ist, bei erkannter Spurwechselabsicht das auf die Lenkung ausgeübte Stellmoment (M_{A}) im Sinne eines leichteren Spurwechsels zu modifizieren, wobei die Steuereinrichtung (14) ein Prüfmodul (30) aufweist, das anhand der Daten der Sensoreinrichtung (10, 24, 28) prüft, ob ein Spurwechsel zulässig ist, und das die Modifizierung des Stellmoments (M_{A}) nur bei zulässigem Spurwechsel erlaubt, **dadurch gekennzeichnet, daß** bei zulässigem Spurwechsel und erkannter Spurwechselabsicht von der eigenen Spur (42) auf eine Zielspur (44) der Betrag des auf die Lenkung ausgeübten Stellmoments (M_{A}) so von der Abweichung (A) des Fahrzeugs (32) von einer Solltrajektorie (46, 48) abhängig ist, daß die Kraft für Querpositionen zwischen der Solltrajektorie (46) auf der eigenen Spur (42) und der Solltrajektorie (48) auf der Zielspur (44) verringert oder gleich null ist, jenseits der Solltrajektorie (48) der Zielspur (44) jedoch wieder zunimmt.

2. Spurhalteassistent nach Anspruch 1, **dadurch gekennzeichnet, daß** die Abhängigkeit zwischen dem Betrag des Stellmoments (M_{A}) und der Abweichung
(A) jenseits der Solltrajektorie der Zielspur (44) der gleiche ist wie bei einer Spurhaltefunktion auf der Zielspur (44) ohne Spurwechselabsicht.

3. Spurhalteassistent nach Anspruch 1 oder 2, **dadurch gekennzeichnet, daß** die Steuereinrichtung (14) dazu ausgebildet ist, den bei erkannter Spurwechselabsicht geltenden Zusammenhang zwischen dem Stellmoment (M_{A}) und der Abweichung (A) des Fahrzeugs bis zum Vollzug des Spurwechsels beizubehalten.

4. Spurhalteassistent nach einem der vorstehenden Ansprüche, **dadurch gekennzeichnet, daß** das Prüfmodul (30) dazu ausgebildet ist, die Modifizierung des Stellmoments (M_{A}) zu verhindern, wenn anhand des Charakters der erkannten Fahrspurmarkierung (60) festgestellt wird, daß ein Spurwechsel nicht erlaubt ist.

5. Spurhalteassistent nach einem der vorstehenden Ansprüche, **dadurch**
**gekennzeichnet, daß** ein Spurwechselassistent (26) mit einem zugehörigen Sensor (28) zur Überwachung des Rückraums des Fahrzeugs (32) vorhanden ist und daß das Prüfmodul (30) die Modifizierung des Stellmoments (M_{A}) verhindert, wenn der Spurwechselassistent (26) meldet, daß ein gefahrloser Spurwechsel aufgrund von im Rückraum georteten Fahrzeugen (62) nicht möglich ist.

6. Spurhalteassistent nach einem der vorstehenden Ansprüche, **dadurch**
**gekennzeichnet, daß** das Prüfmodul (30) die Modifizierung des Stellmoments (M_{A}) nur für die Fahrzeugseite zuläßt, auf der eine Nebenspur für einen Spurwechsel vorhanden ist.

## Claims

1. Lane keeping assistant for motor vehicles, having a sensor device (10, 24, 28) for detecting the lanes (42, 44) on the carriageway (58), a control device (14) which applies an actuating torque (M_{A}) to the steering (18) of the vehicle (32) via an actuator (16) in order to keep the vehicle in the lane, and a device (20) for detecting an intention by the driver to change lane, wherein the control device (14) is designed such that when an intention to change lane is recognized said control device (14) modifies the actuating torque (M_{A}) applied to the steering with the effect of bringing about an easier lane change, wherein the control device (14) has a check module (30) which checks whether a lane change is permissible by reference to the data of the sensor device (10, 24, 28), and which permits modification of the actuating torque (M_{A}) only when a lane change is permissible, **characterized in that** when a lane change is permissible and an intention to change lane from the driver's own lane (42) to a target lane (44) is recognized, the absolute value of the actuating torque (M_{A}) which is applied to the steering is dependent on the deviation (A) of the vehicle (32) from a reference trajectory (46, 48), in such a way that the force for lateral positions between the reference trajectory (46) on the driver's own lane (42) and the reference trajectory (48) on the target lane (44) is reduced or is equal to zero but increases again beyond the reference trajectory (48) of the target lane (44).

2. Lane keeping assistant according to Claim 1,
**characterized in that** the dependence between the absolute value of the actuating torque (M_{A}) and the deviation (A) beyond the reference trajectory of the target lane (44) is the same as in the case of a lane keeping function on the target lane (44) without an intention to change lane.

3. Lane keeping assistant according to Claim 1 or 2, **characterized in that** the control device (14) is designed such that when an intention to change lane is recognized, the relationship which applies between the actuating torque (M_{A}) and the deviation
(A) of the vehicle is maintained until the lane change is completed.

4. Lane keeping assistant according to one of the preceding claims, **characterized in that** the check module (30) is designed to prevent modification of the actuating torque (M_{A}) if it is detected by reference to the character of the recognized lane marking (60) that a lane change is not permitted.

5. Lane keeping assistant according to one of the preceding claims, **characterized in that** a lane change assistant (26) with an associated sensor (28) is provided for monitoring the area behind the vehicle (32), and **in that** the check module (30) prevents modification of the actuating torque (M_{A}) if the lane change assistant (26) reports that a safe lane change is not possible owing to vehicles (62) which are located in the area behind.

6. Lane keeping assistant according to one of the preceding claims, **characterized in that** the check module (30) permits the modification of the actuating torque (M_{A}) only for the side of the vehicle on which an adjacent lane for a lane change is provided.

## Revendications

1. Assistant de maintien de trajectoire pour véhicules automobiles, comprenant un dispositif de détection (10, 24, 28) pour détecter les voies de circulation (42, 44) sur la chaussée (58), un dispositif de commande (14) qui exerce, par le biais d'un élément de commande (16), un moment de positionnement (M_{A}) sur la direction (18) du véhicule (32) afin de maintenir le véhicule dans la trajectoire, et un dispositif (20) de détection d'une intention de changement de voie du conducteur, le dispositif de commande (14) étant configuré pour modifier le moment de positionnement (M_{A}) exercé sur la direction en vue de faciliter le changement de voie en cas de détection d'une intention de changement de voie, le dispositif de commande (14) présentant un module de contrôle (30) qui contrôle, à l'aide des données du dispositif de détection (10, 24, 28), si un changement de voie est autorisé et qui n'autorise la modification du moment de positionnement (M_{A}) que si le changement de voie est autorisé, **caractérisé en ce que** lorsque le changement de voie est autorisé et en présence d'une intention de changement de voie de la voie propre (42) vers une voie destinataire (44), la valeur du moment de positionnement (M_{A}) exercé sur la direction est dépendante de l'écart (A) du véhicule (32) d'une trajectoire voulue (46, 48) de sorte que la force pendant les positions intermédiaires entre la trajectoire voulue (46) sur la voie propre (42) et la trajectoire voulue (48) sur la voie destinataire (44) est réduite ou égale à zéro, mais augmente de nouveau du côté de la trajectoire de consigne (48) de la voie destinataire (44).

2. Assistant de maintien de trajectoire selon la revendication 1, **caractérisé en ce que** la dépendance entre la valeur du moment de positionnement (M_{A}) et l'écart (A) du côté de la trajectoire de consigne de la voie destinataire (44) est la même que dans le cas d'une fonction de maintien de la trajectoire sur la voie destinataire (44) sans intention de changement de voie.

3. Assistant de maintien de trajectoire selon la revendication 1 ou 2, **caractérisé en ce que** le dispositif de commande (14) est conçu pour maintenir jusqu'à l'achèvement du changement de voie la relation entre le moment de positionnement (M_{A}) et l'écart (A) qui existe lors de la détection d'une intention de changement de voie.

4. Assistant de maintien de trajectoire selon l'une des revendications précédentes, **caractérisé en ce que** le module de contrôle (30) est conçu pour empêcher la modification du moment de positionnement (M_{A}) si la caractéristique du marquage de la voie de circulation (60) détecté amène à constater qu'un changement de voie n'est pas autorisé.

5. Assistant de maintien de trajectoire selon l'une des revendications précédentes, **caractérisé en ce qu'**il existe un assistant de changement de voie (26) muni d'un capteur (28) associé pour surveiller l'espace arrière du véhicule (32), et que le module de contrôle (30) empêche la modification du moment de positionnement (M_{A}) si l'assistant de changement de voie (26) signale qu'un changement de voie sans danger est impossible en raison des véhicules (62) localisés dans l'espace arrière.

6. Assistant de maintien de trajectoire selon l'une des revendications précédentes, **caractérisé en ce que** le module de contrôle (30) n'autorise la modification du moment de positionnement (M_{A}) que pour le côté du véhicule sur lequel il existe une voie voisine permettant le changement de voie.
